# EUROPÄISCHE PATENTSCHRIFT

(11) **EP 2 728 330 B1**
(45) Veröffentlichungstag und Bekanntmachung des Hinweises auf die Patenterteilung: **20.06.2018**
(21) Anmeldenummer: 13191233.9
(22) Anmeldetag: 01.11.2013
(51) Int. Cl.: G01M 1/12, G01M 1/04

(54) **Verfahren und Vorrichtung zur Bestimmung der statischen Unwucht**
Method and device for determining the static unbalance
Procédé et dispositif destinés à la détermination du déséquilibre statique

(30) Priorität: 06.11.2012 DE 102012110621
(43) Veröffentlichungstag der Anmeldung: 07.05.2014
(73) Patentinhaber: Schenck RoTec GmbH, 64293 Darmstadt (DE)
(72) Erfinder: Breitwieser, Matthias, 64823 Groß-Umstadt (DE); Frese, Stephan, 64289 Darmstadt (DE); Hartnagel, Matthias, 64683 Einhausen (DE); Wanke, Thomas, 64823 Groß-Umstadt (DE)
(74) Vertreter: Haar, Lucas Heinz Jörn

(56) Entgegenhaltungen:
- WO-A1-2011/042446
- JP-A- 2009 031 218
- JP-A- 2012 093 158

## Beschreibung

Die Erfindung betrifft ein Verfahren und eine Vorrichtung zur Bestimmung der statischen Unwucht eines mit einer Zentrierfläche versehenen Körpers mit Hilfe einer zur Bestimmung des Schwerpunkts des Körpers ausgebildeten Waage, die eine Aufnahme für den Körper und Zentriermittel aufweist, die den Körper zum Bezugspunkt der Waage zentrieren.

Ein Verfahren und eine Vorrichtung der angegebenen Art sind aus DE 33 30 974 C2, JP 2012 093158 und DE 10 2009 016 123 A1 bekannt. Bei Verfahren und Vorrichtungen dieser Art ist es erforderlich, den zu untersuchenden Körper mit großer Genauigkeit zum Bezugspunkt der Waage zu zentrieren. Wird die Zentrierfläche des Körpers von einer Bohrung gebildet, so ist es bekannt, den Körper mittels eines in die Bohrung eingreifenden Zentrierdorns zu spannen. Bei größeren und schwereren, meist scheibenförmigen Körpern erfolgt zunächst ein Vorzentrieren beim Auflegen des Körpers auf die Auflagefläche der Aufnahme. Anschließend wird der Körper mit Hilfe eines Dehnspanndorns oder eines Dreibackenfutters nachzentriert und gespannt. Die bekannten Zentriermittel haben den Nachteil, dass die Gefahr einer Beschädigung der Zentrierfläche durch das Spannen besteht. Um diese Gefahr klein zu halten, müssten die Spannmittel jeweils an den Durchmesser der Spannfläche angepasst werden. Für verschiedene Spanndurchmesser werden daher verschiedene, jeweils auszutauschende Spannmittel benötigt. Dies erhöht den Bauaufwand und die Kosten der Vorrichtung.

Der Erfindung liegt die Aufgabe zugrunde, ein Verfahren der eingangs genannten Art und eine Vorrichtung zur Durchführung des Verfahrens anzugeben, welche eine Unwuchtbestimmung mit hoher Wiederholgenauigkeit ermöglicht und eine Beschädigung des zu messenden Körpers durch das Spannen in der Aufnahme zuverlässig vermeidet.

Die Aufgabe wird durch ein Verfahren mit den in Patentanspruch 1 angegebenen Merkmalen und durch eine Vorrichtung mit den in Patentanspruch 6 angegebenen Merkmalen gelöst.

Nach der Erfindung erfolgt bei dem Verfahren die Bestimmung der statischen Unwucht eines mit einer Zentrierfläche versehenen Körpers mit Hilfe einer zur Bestimmung des Schwerpunkts des Körpers ausgebildeten Waage, die eine Aufnahme für den Körper und Zentriermittel aufweist, die den Körper beim Auflegen auf die Aufnahme in eine im Wesentlichen zentrische Lage zum Bezugspunkt der Waage führen und umfasst die Schritte: Auflegen des Körpers auf die Aufnahme der Waage, Messen der Lage der Zentrierfläche des Körpers in Bezug auf die Aufnahme mittels wenigstens zwei in definiertem Winkelabstand voneinander angeordneten, elektrischen Wegsensoren, Berechnen aus den Messsignalen der Wegsensoren mittels einer an die Wegsensoren angeschlossenen elektrischen Auswerteschaltung der Exzentrizität der Zentrierfläche des Körpers zum Bezugspunkt der Waage, Wiegen des Körpers und Erfassen der Masse und der Lage des Schwerpunkts des Körpers in Bezug auf den Bezugspunkt der Waage, Berechnen mittels der Auswerteschaltung aus den von der Waage erhaltenen Messsignalen und der Exzentrizität der Zentrierfläche des Körpers zum Bezugspunkt der Waage der Unwucht des Körpers.

Bei dem Verfahren nach der Erfindung wird auf eine genaue, zentrische Positionierung des Körpers auf den Referenzpunkt der Waage verzichtet und eine ungenaue Positionierung nach dem Auflegen auf die Aufnahme in Kauf genommen. Stattdessen wird im Gegensatz zu den bekannten Verfahren mittels Wegsensoren die genaue Position der Zentrierfläche gemessen und die vorhandene Exzentrizität der Zentrierflächenmitte zum Bezugspunkt der Waage bei der Unwuchtbestimmung berücksichtigt und kompensiert. Auf diese Weise wird eine genaue Unwuchtbestimmung mit hoher Wiederholgenauigkeit erreicht.

Für das Messen muss der Körper nur vorpositioniert auf der Aufnahme abgelegt werden. Anschließend wird er nicht mehr bewegt. Da das Vorpositionieren nur geringe Führungskräfte erfordert und keine hohen Druckkräfte zum Spannen an der Zentrierfläche aufgebracht werden, ist die Gefahr einer Beschädigung des Rotors so gut wie ausgeschlossen.

Ein weiterer Vorteil des Verfahrens nach der Erfindung besteht in einer kurzen Prozesszeit. Die Wegsensoren können die Position der Zentrierfläche sehr schnell erfassen und benötigen weniger Zeit als die Verschiebung des Körpers in die Messposition mit Hilfe von Spannvorrichtungen. Die Wiederholgenauigkeit der Positionsmessung hängt nur von der Genauigkeit der Wegsensoren ab und ermöglicht höhere Genauigkeiten als sie mit einem Dreibackenfutter erzielbar sind.

Um die Wegsensoren zu kalibrieren, wird nach einem weiteren Vorschlag der Erfindung mittels der Wegsensoren die Lage eines auf die Aufnahme aufgelegten, rotationssymmetrischen Kalibrierkörpers gemessen und der Mittelpunkt des Kalibrierkörpers als Ursprung eines den Wegsensoren zugeordneten Sensorkoordinatensystems bestimmt. Anschließend wird durch Wiegen des Kalibrierkörpers mittels der Waage ein Vektor ermittelt, der die Exzentrizität des Sensorkoordinatensystems zu einem Waagenkoordinatensystem beschreibt, dessen Ursprung im Bezugspunkt der Waage liegt. Dieses Kalibrierverfahren ist einfach und schnell durchführbar und gewährleistet eine genaue Kalibrierung der Waage.

Die Exzentrizität der Zentrierfläche des Körpers, dessen Unwucht zu bestimmen ist, zum Bezugspunkt der Waage kann nach einem weiteren Vorschlag der Erfindung auf einfache Weise dadurch bestimmt werden, dass aus den Messsignalen der Wegsensoren die Lage des Mittelpunkts der Zentrierfläche des Körpers und ein Vektor berechnet wird, der die Exzentrizität des Mittelpunkts der Zentrierfläche zum Ursprung des Sensorkoordinatensystems beschreibt und dass durch Addition des berechneten Vektors und des durch vorherige Kalibrierung gewonnenen Vektors der Exzentrizität des Sensorkoordinatensystems zum Ursprung des Waagenkoordinatensystems ein die Exzentrizität des Mittelpunkts der Zentrierfläche zum Bezugspunkt der Waage beschreibender Vektor berechnet wird.

Zur Bestimmung der Unwucht des Körpers kann mittels der Waage ein die Exzentrizität des Schwerpunkts des Körpers in Bezug auf das Waagenkoordinatensystem beschreibender Vektor gemessen werden und durch Subtraktion dieses Vektors und des die Exzentrizität der Zentrierfläche in Bezug auf das Waagenkoordinatensystem beschreibenden Vektors ein Vektor berechnet werden, der die Exzentrizität des Schwerpunkts in Bezug auf den Mittelpunkt der Zentrierfläche des Körpers beschreibt. Aus der Exzentrizität des Schwerpunkts des Körpers und seiner Masse kann dann in bekannter Weise die statische Unwucht berechnet werden.

Als Wegsensoren können bei dem erfindungsgemäßen Verfahren berührungslos messende Sensoren oder Sensoren mit bewegbaren Tastelementen verwendet werden. Werden Wegsensoren mit Tastelementen verwendet, so können diese die Messung der Unwucht beeinflussen, da die Tastelemente beim Ertasten der Zentrierflächenposition bewegt und relativ zur Aufnahme der Waage verschoben werden. Um eine solche Beeinträchtigung der Unwuchtmessung zu vermeiden, kann nach der Erfindung die bewegbare Masse jedes Tastelements ermittelt und aus der Masse und dem durch das Messsignal gegebenen Verfahrweg des jeweiligen Tastelements für jedes Tastelements ein Unwuchtbeitrag berechnet werden. Die berechneten Unwuchtbeiträge können dann von der aus der Lage des Schwerpunkts berechneten Unwucht des Körpers abgezogen werden.

Eine vorteilhafte Vorrichtung zur Durchführung des Verfahrens umfasst nach der Erfindung eine zur Bestimmung des Schwerpunkts des Körpers ausgebildete Waage, die eine Aufnahme für den Körper und Zentriermittel aufweist, die den Körper beim Auflegen auf die Aufnahme in eine im Wesentlichen zentrische Lage zum Bezugspunkt der Waage führen, wobei die Aufnahme wenigstens zwei in definiertem Winkelabstand voneinander angeordnete, elektrische Wegsensoren aufweist, welche die Lage der Zentrierfläche des Körpers in Bezug auf die Aufnahme messen und welche an eine elektrische Auswerteschaltung angeschlossen sind, die dazu eingerichtet ist, aus den Messsignalen der Wegsensoren die Exzentrizität der Zentrierfläche des Körpers zu dem Bezugspunkt der Waage zu berechnen und aus durch Wiegen des Körpers erhaltenen Messsignalen der Waage und der berechneten Exzentrizität der Zentrierfläche den Schwerpunkt und die Unwucht des Körpers in Bezug auf den Mittelpunkt seiner Zentrierfläche zu berechnen.

Die erfindungsgemäße Vorrichtung kann durch Verwendung einfacher, mechanischer Bauteile kostengünstig verwirklicht werden, da keine hohen Prozesskräfte aufzunehmen und zu erzeugen sind. Die Vorrichtung ermöglicht auch eine Anpassung an verschiedene Durchmesser der Zentrierfläche, indem die Wegsensoren radial verstellt werden können. Nach einer Verstellung ist lediglich eine erneute Kalibrierung der Wegsensoren auf den Mittelpunkt notwendig. Dies ist auf einfache Weise mit einem Kalibrierring möglich.

Vorzugsweise weist die Vorrichtung Wegsensoren mit bewegbaren Tastelementen auf, die an die Zentrierfläche des Körpers anlegbar sind, wobei die Auswerteschaltung dazu eingerichtet ist, aus der Masse und dem Verfahrweg jedes Tastelementes einen Unwuchtbeitrag zu berechnen und die berechneten Unwuchtbeiträge von der berechneten Unwucht des Körpers abzuziehen. Eine Lageänderung der Tastelemente beeinflusst daher die Unwuchtbestimmung nicht.

Die Aufnahme der Vorrichtung kann nach der Erfindung einen Aufnahmeteller in Form einer Kreisscheibe aufweisen, auf dem in gleichem Abstand von der Mitte des Aufnahmetellers und in einem Winkelabstand von jeweils 120° die Wegsensoren angeordnet sind. Die Tastelemente der Wegsensoren können von Hand oder mittels eines antreibbaren Aktors radial bewegbar sein.

Die Aufnahme für den zu messenden Körper kann Aufnahmeelemente haben, die von dem Aufnahmeteller abstehen und zwischen den Wegsensoren angeordnet sind und die in einer gemeinsamen Ebene liegende Auflageflächen für den Körper haben.

Zur Führung des Körpers in eine im Wesentlichen zentrische Lage kann die Aufnahme mit wenigstens drei konischen Führungselementen versehen sein, die aus der Ebene der Auflageflächen hervorstehen und zur Führung des Körpers an der Zentrierfläche ausgebildet sind. Zur Anpassung an verschiedene Durchmesser der Zentrierfläche können die Führungselemente radial verstellbar sein.

Die Erfindung wird nachfolgend anhand eines Ausführungsbeispiels näher erläutert, das in der Zeichnung dargestellt ist. Es zeigen
- Figur 1: eine Draufsicht auf eine Schwerpunktwaage nach der Erfindung und
- Figur 2: Koordinatensysteme zur Erläuterung des Verfahrens nach der Erfindung.

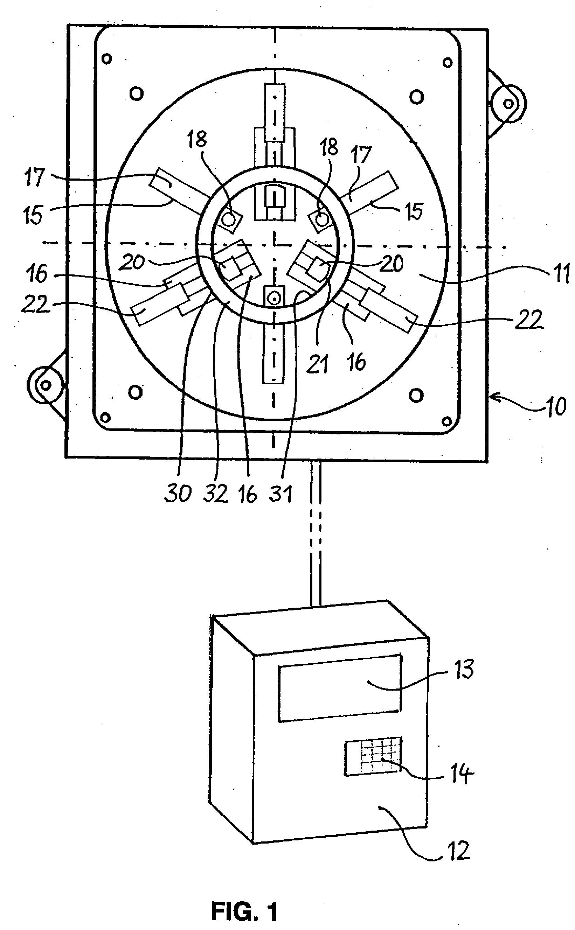

Figur 1 zeigt eine Waage 10 zum Bestimmen der Unwucht eines zur Drehung um eine Achse bestimmten Körpers durch Wiegen des Körpers und Messen der Lage seines Schwerpunkts. Die Waage 10 hat einen Aufnahmeteller 11, der die Form einer ebenen Kreisscheibe hat. Der Aufnahmeteller 11 hat zwei Freiheitsgrade und ist in vertikaler Richtung an wenigstens drei Kraftaufnehmern abgestützt, die sich unter dem Auflageteller befinden und analoge oder digitale elektrische Messsignale abgeben. Die Messsignale werden an eine Auswerteeinrichtung 12 übertragen, die einen Bildschirm 13 zur Angabe der ermittelten Unwuchtdaten und eine Tastatur 14 zur Dateneingabe aufweist. Auf dem Aufnahmeteller 11 sind in strahlenförmiger Anordnung Aufnahmeelemente 15 und Wegsensoren 16 angeordnet. Grundsätzlich wären zwei Wegsensoren, z.B. im Abstand von 90°, ausreichend. Drei Wegsensoren erhöhen aber die Genauigkeit der Positionsmessung.

Die Aufnahmeelemente 15 haben einen Mittenabstand von 120°. Die Wegsensoren 16 befinden sich jeweils zwischen den Aufnahmeelementen 15 und haben von diesen einen Mittenabstand von 60°. Die Aufnahmeelemente 15 bilden mit ihren Oberseiten Auflageflächen 17, die in einer gemeinsamen, parallel und in einem Abstand von dem Aufnahmeteller 11 angeordneten Ebene liegen. An den Aufnahmeelementen 15 sind stiftförmige Führungselemente 18 angebracht, die nach oben über die Ebene der Auflageflächen 17 hinausragen und eine konische, sich nach oben verjüngende Form haben. Die Führungselemente 18 befinden sich im gleichen Abstand von der Mittelachse des Aufnahmetellers 11 und dienen zur Zentrierung des auf die Aufnahmeelemente aufgelegten Körpers.

Die Wegsensoren 16 erstrecken sich unterhalb der gemeinsamen Ebene der Auflageflächen 17. Sie haben Tastelemente 20, die nach oben über die Ebene der Auflageflächen 17 hinausragen und radial äußere Tastflächen 21 haben, die zur Anlage an eine Bohrungsfläche eines auf den Aufnahmeelementen 15 angeordneten Körpers ausgebildet und bestimmt sind. Die Tastelemente 20 sind in einer Schlittenführung der Wegsensoren 16 radial beweglich gelagert und mittels elektrischer Aktoren 22 bewegbar. Die Steuerung der Aktoren 22 erfolgt durch die Auswerteeinrichtung 12. Die jeweilige Position der Tastelemente 20 und das Maß ihrer radialen Bewegung sind mittels an den Wegsensoren 16 angeordneten Weggebern messbar. Die Messergebnisse der Wegsensoren 16 werden an die Auswerteeinrichtung 12 übertragen.

Auf der Waage 10 befindet sich als Beispiel ein Körper 30, dessen Unwucht gemessen werden soll. Der Körper 30 ist rotationssymmetrisch und hat eine Zentrierfläche 31, die in dem gewählten Beispiel die Wand einer zylindrischen Bohrung des Körpers 30 ist. Der Körper 30 hat an seinen axialen Enden ebene Stirnflächen 32, die in zur Achse der Zentrierfläche 31 senkrechten Ebenen liegen. Mit seiner unteren Stirnfläche 32 liegt der Körper 30 auf den Auflageflächen 17 der Aufnahmeelemente 15 auf. Durch die Führungselemente 18, die den Körper 30 beim Auflegen an der Zentrierfläche 31 führen, ist er gegenüber dem Aufnahmeteller 11 im Wesentlichen zentriert. Die Zentrierung ist jedoch ungenau, denn die Führungselemente 18 sind in einem solchen Abstand von der Achse des Aufnahmetellers 11 angeordnet, dass der Körper 30 leicht und ohne die Gefahr einer Beschädigung, beispielsweise durch Klemmung, auf die Waage 10 aufgelegt werden kann.

Nach dem Auflegen des Körpers 30 werden durch Ansteuerung der Aktoren 22 die Tastelemente 20 mit ihren Tastflächen 21 mit geringer Kraft an die Zentrierfläche 31 angelegt. Der Körper 30 wird hierdurch nicht bewegt und behält seine aufgelegte Position unverändert bei.

Aus den Messsignalen der Wegsensoren 16 wird durch Vergleich mit zuvor gewonnenen und in der Auswerteeinrichtung 12 gespeicherten Kalibrierdaten die Abweichung der Lage des Körpers 30 von einer exakt zentrierten Lage und vom Bezugspunkt der Waage 10 berechnet und bei der Unwuchtbestimmung kompensiert.

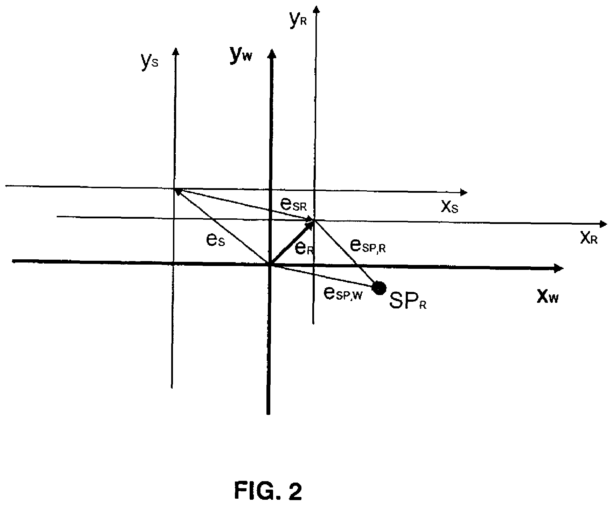

Anhand der in Figur 2 dargestellten Koordinatensysteme wird nachfolgend die Berechnung der näher erläutert. In Figur 2 ist mit W das Waagenkoordinatensystem, dessen Ursprung im Bezugspunkt der Waage 10 liegt, mit S das Sensorkoordinatensystem, dessen Ursprung im Mittelpunkt der Wegsensoren 16 liegt, und mit R das Körperkoordinatensystem, dessen Ursprung im Mittelpunkt der Zentrierfläche 31 des Körpers 30 liegt, bezeichnet. Der Bezugspunkt der Waage 10 und der Mittelpunkt der Wegsensoren 16 werden durch einen Kalibriervorgang unter Verwendung eines Kalibrierkörpers mittels Umschlagkompensation bestimmt, wobei die Wegsensoren 16 auf den Mittelpunkt des Kalibrierkörpers kalibriert werden und durch Wiegen ein Vektor **e_{S}** ermittelt wird, der die Exzentrizität des Sensorkoordinatensystems S zum Waagenkoordinatensystem W beschreibt.

Zur Unwuchtbestimmung des Körpers 30 wird zunächst aus den Messsignalen der Wegsensoren 16, welche die Verschiebung der Tastelemente 20 gegenüber der durch Kalibrierung gewonnenen Nullpunktlage angeben, der Mittelpunkt der Zentrierfläche 31 und anschließend ein Vektor **e_{SR}** berechnet, der die Exzentrizität des Mittelpunkts der Zentrierfläche 31 zum Ursprung des Sensorkoordinatensystems S angibt. Durch Addition des Vektors **e_{SR}** und des bei der Kalibrierung gewonnen und gespeicherten Vektors **e_{S}** wird ein Vektor **e_{R}** berechnet, der die Exzentrizität des Mittelpunkts der Zentrierfläche 31 des Körpers 30 zum Ursprung des Waagenkoordinatensystems W angibt.

Aus den Messsignalen der Waage 10 kann in üblicher Weise die Lage des Schwerpunkts **SP_{R}** des Körpers 30 in Bezug auf das Waagenkoordinatensystem W bestimmt und durch einen Vektor **e_{SP,W}** beschrieben werden. Der für die Berechnung der Unwucht gesuchte Vektor **e_{SP,R}** im auf den Mittelpunkt der Zentrierfläche 31 bezogenen Körperkoordinatensystem R kann dann durch Subtraktion der Vektoren **e_{SP,W}** und **e_{R}** berechnet werden. Der berechnete Vektor **e_{SP,R}** gibt die Exzentrizität des Schwerpunkts des Körpers 30 an. Aus der Exzentrizität des Schwerpunkts und der Masse des Körpers 30 kann dann in bekannter Weise die Größe und Winkellage der Unwucht des Körpers 30 berechnet werden.

Bei der Unwuchtberechnung wird auch berücksichtigt, dass die Verschiebung der Tastelemente 20 beim Anlegen an die Zentrierfläche 31 die gemessene Unwucht beeinflusst. Aus der Masse der verschiebbaren Tastelemente 20 und den aus den Messsignalen der Wegsensoren 16 entnehmbaren Verschiebewegen wird für jeden Wegsensor 16 ein Unwuchtbeitrag berechnet, der von der aus der Exzentrizität des Schwerpunkts und der Masse des Körpers 30 berechneten Unwucht abzuziehen ist, um die tatsächliche Unwucht des Körpers 30 zu erhalten.

Das Verfahren und die Vorrichtung nach der Erfindung eignen sich für alle bekannten Anwendungen von Schwerpunktwaagen zur Unwuchtbestimmung. In Hinsicht auf Größe und Gewicht der zu messenden Körper kann der Anwendungsbereich noch erweitert werden, da ein bewegen des aufgelegten Körpers zur genaueren Zentrierung nicht erforderlich ist. Die Anwendung ist auch nicht auf konkave Zentrierflächen beschränkt sondern ist gleichermaßen für konvexe Zentrierflächen geeignet. Zur Anpassung an verschiedene Durchmesser können die Wegsensoren und die Auflageelemente radial verschiebbar oder versetzbar an dem Auflageteller angebracht sein. Anstelle von elektromechanischen Wegsensoren können auch optische und berührungslos arbeitende Wegsensoren verwendet werden.

## Patentansprüche

1. Verfahren zur Bestimmung der statischen Unwucht eines mit einer Zentrierfläche (31) versehenen Körpers (30) mit Hilfe einer zur Bestimmung des Schwerpunkts des Körpers (30) ausgebildeten Waage (10), die eine Aufnahme, die den Körper (30) mit vertikal ausgerichteter Drehachse aufnehmen kann, und Zentriermittel aufweist, die den Körper (30) beim Auflegen auf die Aufnahme in eine im Wesentlichen zentrische Lage zu einem Bezugspunkt der Waage (10) führen, mit folgenden Schritten:
Auflegen des Körpers (30) auf die Aufnahme der Waage (10),
Messen der Lage der Zentrierfläche (31) des Körpers (30) in Bezug auf die Aufnahme mittels wenigstens zwei in definiertem Winkelabstand voneinander angeordneten, elektrischen Wegsensoren (16),
Berechnen der Exzentrizität der Zentrierfläche (31) des Körpers (30) zum Bezugspunkt der Waage (10) aus den Messsignalen der Wegsensoren (16) mittels einer an die Wegsensoren (16) angeschlossenen elektrischen Auswerteschaltung,
Wiegen des Körpers (30) und Erfassen der Masse und der Lage des Schwerpunkts des Körpers (30) in Bezug auf den Bezugspunkt der Waage (10),
Berechnen der Unwucht des Körpers (30) aus den von der Waage (10) erhaltenen Messsignalen und der Exzentrizität der Zentrierfläche (31) des Körpers (30) zum Bezugspunkt der Waage (10) mittels der Auswerteschaltung.

2. Verfahren nach Anspruch 1, **dadurch gekennzeichnet, dass** zur Kalibrierung mittels der Wegsensoren (16) die Lage eines auf die Aufnahme aufgelegten, rotationssymmetrischen Kalibrierkörpers gemessen und der Mittelpunkts des Kalibrierkörpers als Ursprung eines den Wegsensoren (16) zugeordneten Sensorkoordinatensystems (S) bestimmt wird und dass mittels der Waage (10) durch Wiegen des Kalibrierkörpers ein Vektor (**e_{S}**) ermittelt wird, der die Exzentrizität des Sensorkoordinatensystems (S) zu einem Waagenkoordinatensystem (W) beschreibt, dessen Ursprung im Bezugspunkt der Waage (10) liegt.

3. Verfahren nach Anspruch 2, **dadurch gekennzeichnet, dass** aus den Messsignalen der Wegsensoren (16) die Lage des Mittelpunkts der Zentrierfläche (31) des Körpers (30) und ein Vektor (**e_{SR}**) berechnet wird, der die Exzentrizität des Mittelpunkts der Zentrierfläche (31) zum Ursprung des Sensorkoordinatensystems (S) beschreibt und dass durch Addition des Vektors (**e_{SR}**)der Exzentrizität des Mittelpunkts der Zentrierfläche (31) und des Vektors (**e_{S}**) der Exzentrizität des Sensorkoordinatensystems (S) zum Ursprung des Waagenkoordinatensystems (W) ein Vektor (**e_{R}**) berechnet wird, der die Exzentrizität des Mittelpunkts der Zentrierfläche (31) des Körpers (30) zum Bezugspunkt der Waage (10) beschreibt.

4. Verfahren nach Anspruch 3, **dadurch gekennzeichnet, dass** mittels der Waage (10) der Vektor (**e_{SP,W}**)der Exzentrizität des Schwerpunkts (**SP_{R}**) des Körpers (30) in Bezug auf das Waagenkoordinatensystem (W) gemessen wird und dass durch Subtraktion des Vektors (**e_{SP,W}**) der Exzentrizität des Schwerpunkts (**SP_{R}**) des Körpers und des Vektors (**e_{R}**) der Exzentrizität der Zentrierfläche (31) des Körpers (30) in Bezug auf das Waagenkoordinatensystem (W) ein Vektor (**e_{SP,R}**) berechnet wird, der die Exzentrizität des Schwerpunkts (**SP_{R}**) in Bezug auf den Mittelpunkt der Zentrierfläche (31) beschreibt und aus Exzentrizität des Schwerpunkts (**SP_{R}**) in Bezug auf den Mittelpunkt der Zentrierfläche (31) und Masse des Körpers (30) die Unwucht des Körpers (30) berechnet wird.

5. Verfahren nach einem der Ansprüche 1 bis 4, **dadurch gekennzeichnet, dass** Wegsensoren (16) mit bewegbaren Tastelementen (20), die an die Zentrierfläche (31) des Körpers (30) anlegbar sind, verwendet werden, dass die bewegbare Masse jedes Tastelements (20) ermittelt wird und dass aus der Masse und dem durch das Messsignal gegebenen Verfahrweg der einzelnen Tastelemente (20) ein Unwuchtbeitrag jedes Tastelements (20) berechnet wird und die berechneten Unwuchtbeiträge von der aus der Exzentrizität des Schwerpunkts (**SP_{R}**) berechneten Unwucht des Körpers (30) abgezogen werden.

6. Vorrichtung zur Bestimmung der statischen Unwucht eines mit einer Zentrierfläche (31) versehenen Körpers(30), umfassend eine zur Bestimmung des Schwerpunkts des Körpers (30) ausgebildete Waage (10) mit einer Aufnahme, die den Körper (30) mit vertikal ausgerichteter Drehachse aufnehmen kann, und Zentriermitteln, die den Körper (30) beim Auflegen auf die Aufnahme in eine im Wesentlichen zentrische Lage zu einem Bezugspunkt der Waage (10) führen, wobei die Aufnahme wenigstens zwei in definiertem Winkelabstand voneinander angeordnete, elektrische Wegsensoren (16) aufweist, welche die Lage der Zentrierfläche (31) des Körpers (30) in Bezug auf die Aufnahme messen, wobei die Wegsensoren (16) an eine elektrische Auswerteschaltung angeschlossen sind, die dazu eingerichtet ist, aus den Messsignalen der Wegsensoren (16) die Exzentrizität der Zentrierfläche (31) des Körpers (30) zu dem Bezugspunkt der Waage (10) zu berechnen und aus den durch Wiegen des Körpers (30) erhaltenen Messsignalen der Waage (10) und der berechneten Exzentrizität der Zentrierfläche (31) den Schwerpunkt und die Unwucht des Körpers (30) zu berechnen.

7. Vorrichtung nach Anspruch 6, **dadurch gekennzeichnet, dass** jeder der Wegsensoren (16) ein bewegbares Tastelement (20) aufweist, das an die Zentrierfläche (31) des Körpers (30) anlegbar ist und dass die Auswerteschaltung dazu eingerichtet ist, aus der Masse und dem Verfahrweg jedes Tastelementes (20) einen Unwuchtbeitrag zu berechnen und die berechneten Unwuchtbeiträge von der berechneten Unwucht des Körpers (30) abzuziehen.

8. Vorrichtung nach einem der Ansprüche 6 oder 7, **dadurch gekennzeichnet, dass** das Tastelement (20) des Wegsensors (16) von Hand oder mittels eines antreibbaren Aktors (22) radial bewegbar ist.

9. Vorrichtung nach einem der Ansprüche 6 bis 8, **dadurch gekennzeichnet, dass** die Aufnahme einen Aufnahmeteller (11) in Form einer Kreisscheibe aufweist, auf dem in gleichem Abstand von der Mitte des Aufnahmetellers (11) und in einem Winkelabstand von jeweils 120° die Wegsensoren (16) angeordnet sind.

10. Vorrichtung nach Anspruch 9, **dadurch gekennzeichnet, dass** die Aufnahme Aufnahmeelemente (15) aufweist, die auf dem Aufnahmeteller (11) zwischen den Wegsensoren (16) angeordnet sind und in einer gemeinsamen Ebene liegende Auflageflächen (17) für den Körper (30) haben.

11. Vorrichtung nach Anspruch 10, **dadurch gekennzeichnet, dass** die Aufnahme wenigstens drei konische Führungselemente (18) aufweist, die aus der Ebene der Auflageflächen (17) hervorstehen und zur Führung des Körpers (30) an der Zentrierfläche (31) in die im Wesentlichen zentrische Lage zum Bezugspunkt der Waage (10) ausgebildet sind.

## Claims

1. A method for determining the static unbalance of a body (30) provided with a locating surface (31) by means of a weighing scale (10) configured to determine the center of gravity of the body (30) and including a mount capable of receiving the body (30) with a vertically aligned axis of rotation, and locating means guiding the body (30) on its seating engagement with the mount to an essentially centered position with respect to a reference point of the scale (10), comprising the steps:
Placing the body (30) on the mount of the weighing scale (10),
measuring the position of the locating surface (31) of the body (30) with respect to the mount by means of at least two electric displacement sensors (16) spaced from each other at a defined angular distance,
calculating the eccentricity of the locating surface (31) of the body (30) with respect to the reference point of the scale (10) from the measurement signals of the displacement sensors (16) by means of an electric evaluating circuit connected to the displacement sensors (16),
weighing the body (30) and recording mass and position of the center of gravity of the body (30) with respect to the reference point of the scale (10),
computing by means of the evaluating circuit the unbalance of the body (30) using the measurement signals obtained from the scale (10) and the eccentricity of the locating surface (31) of the body (30) with respect to the reference point of the scale (10).

2. The method according to claim 1, **characterized by** measuring for calibration the position of a rotationally symmetrical calibrating body placed on the mount by means of the displacement sensors (16) and defining the center of the calibrating body as the origin of a sensor coordinate system (S) allocated to the displacement sensors (16), and by weighing the calibrating body by means of the scale (10) to determine a vector (**e_{S}**) which describes the eccentricity of the sensor coordinate system (S) with respect to a scale coordinate system (W) having its origin in the reference point of the scale (10).

3. The method according to claim 2, **characterized by** calculating, from the measurement signals of the displacement sensors (16), the position of the center of the locating surface (31) of the body (30) and a vector (**e_{SR}**) describing the eccentricity of the center of the locating surface (31) with respect to the origin of the sensor coordinate system (S), and calculating, by adding the vector (**e_{SR}**) of the eccentricity of the center of the locating surface (31) and the vector (**e_{S}**) of the eccentricity of the sensor coordinate system (S) with respect to the origin of the scale coordinate system (W), a vector (**e_{R}**) which describes the eccentricity of the center of the locating surface (31) of the body (30) with respect to the reference point of the scale (10).

4. The method according to claim 3, **characterized by** measuring by means of the scale (10) the vector (**e_{SP,W}**) of the eccentricity of the center of gravity (**SP_{R}**) of the body (30) with respect to the scale coordinate system (W), and calculating, by subtracting the vector (**e_{SP,W}**) of the eccentricity of the center of gravity (**SP_{R}**) of the body and the vector (**e_{R}**) of the eccentricity of the locating surface (31) of the body (30) with respect to the scale coordinate system (W), a vector (**e_{SP,R}**) which describes the eccentricity of the center of gravity (**SP_{R}**) with respect to the center of the locating surface (31), and by calculating the unbalance of the body (30) from the eccentricity of the center of gravity (**SP_{R}**) with respect to the center of the locating surface (31) and the mass of the body (30).

5. The method according to any one of the claims 1 to 4, **characterized by** employing displacement sensors (16) which have movable tactile elements (20) adapted to make engagement with the locating surface (31) of the body (30), by determining the movable mass of each tactile element (20), and by calculating for each tactile element (20) an unbalance component from the mass and the displacement travel of the individual tactile elements (20) as given by the measurement signal, and by deducting the calculated unbalance components from the unbalance of the body (30) computed from the eccentricity of the center of gravity (**SP_{R}**).

6. A device for determining the static unbalance of a body (30) provided with a locating surface (31), comprising a weighing scale (10) configured to determine the center of gravity of the body (30) and including a mount adapted to receive the body (30) with a vertically aligned axis of rotation, and locating means guiding the body (30) on its being seated on the mount to an essentially centered position with respect to a reference point of the scale (10), said mount including at least two electric displacement sensors (16) spaced from each other at a defined angular distance, which measure the position of the locating surface (31) of the body (30) with respect to the mount, said displacement sensors (16) being connected to an electric evaluating circuit configured to compute the eccentricity of the locating surface (31) of the body (30) with respect to the reference point of the scale (10) from the measurement signals of the displacement sensors (16), and to compute the center of gravity and the unbalance of the body (30) from the measurement signals of the scale (10) obtained by weighing the body (30) and from the computed eccentricity of the locating surface (31).

7. The device according to claim 6, **characterized in that** each of the displacement sensors (16) includes a movable tactile element (20) adapted to make engagement with the locating surface (31) of the body (30), and that the evaluating circuit is configured to compute from the mass and the displacement travel of each tactile element (20) an unbalance component and to deduct the computed unbalance components from the computed unbalance of the body (30).

8. The device according to any one of the claims 6 or 7, **characterized in that** the tactile element (20) of the displacement sensor (16) is movable radially by hand or by means of a drivable actuator (22).

9. The device according to any one of the claims 6 to 8, **characterized in that** the mount includes a dish (11) in the form of a circular disk on which the displacement sensors (16) are arranged equidistantly from the center of the dish (11) and at an angular relative distance of 120°.

10. The device according to claim 9, **characterized in that** the mount includes mounting elements (15) which are arranged on the dish (11) between the displacement sensors (16) and have support surfaces (17) for the body (30) which lie in a common plane.

11. The device according to claim 10, **characterized in that** the mount includes at least three conical guide elements (18) which protrude from the plane of the support surfaces (17) and are configured to guide the body (30) on the locating surface (31) to the essentially centered position with respect to the reference point of the scale (10).

## Revendications

1. Procédé pour déterminer le balourd statique d'un corps (30) muni d'une surface de centrage (31) au moyen d'une balance (10) conçue pour déterminer le centre de gravité du corps (30) et qui est munie d'un logement pouvant recevoir le corps (30) avec son axe de rotation orienté verticalement, et de moyens de centrage guidant le corps (30) lors de sa pose sur le logement dans une position essentiellement centrée par rapport à un point de référence de la balance (10), procédé ayant les étapes suivantes consistant :
- à poser le corps (30) sur le logement de la balance (10),
- à mesurer la position de la surface de centrage (31) du corps (30) par rapport au logement au moyen d'au moins deux capteurs de déplacement électriques (16) disposés l'un par rapport à l'autre à une distance angulaire définie,
- à calculer l'excentricité de la surface de centrage (31) du corps (30) par rapport au point de référence de la balance (10) à partir des signaux de mesure des capteurs de déplacement (16) au moyen d'un circuit d'exploitation électrique raccordé aux capteurs de déplacement (16),
- à peser le corps (30) et à collecter la masse et la position du centre de gravité du corps (30) par rapport au point de référence de la balance (10),
- à calculer le balourd du corps (30) à partir signaux de mesure obtenus par la balance (10) et de l'excentricité de la surface de centrage (31) du corps (30) par rapport au point de référence de la balance (10) au moyen du circuit d'exploitation.

2. Procédé selon la revendication 1, **caractérisé en ce que** pour le calibrage, on mesure au moyen des capteurs de déplacement (16) la position d'un corps d'étalonnage à symétrie de révolution placé sur le logement, et on détermine le centre du corps d'étalonnage comme origine d'un système de coordonnées de capteur (S) associé aux capteurs de déplacement (16), et **en ce qu'**en pesant le corps d'étalonnage au moyen de la balance (10), on détermine un vecteur (**e_{S}**) décrivant l'excentricité du système de coordonnées de capteur (S) par rapport à un système de coordonnées de balance (W) dont l'origine se situe au point de référence de la balance (10).

3. Procédé selon la revendication 2, **caractérisé en ce qu'à** partir des signaux de mesure des capteurs de déplacement (16), on détermine la position du centre de la surface de centrage (31) du corps (30) et on calcule un vecteur (**e_{SR}**) décrivant l'excentricité du centre de la surface de centrage (31) par rapport à l'origine du système de coordonnées de capteur (S), et **en ce que** par adition du vecteur (**e_{SR}**) de l'excentricité du centre de la surface de centrage (31) et du vecteur (**e_{S}**) de l'excentricité du système de coordonnées de capteur (S) par rapport à l'origine du système de coordonnées de la balance (W), on calcule un vecteur (**e_{R}**) décrivant l'excentricité du centre de la surface de centrage (31) du corps (30) par rapport au point de référence de la balance (10).

4. Procédé selon la revendication 3, **caractérisé en ce qu'**au moyen de la balance (10), on mesure le vecteur (**e_{SP,W}**) de l'excentricité du centre de gravité (**SP_{R}**) du corps (30) par rapport au système de coordonnées de balance (W), et **en ce qu'**en soustrayant le vecteur (**e_{SP,W}**) de l'excentricité du centre de la gravité (**SP_{R}**) du corps et le vecteur (**e_{R}**) de l'excentricité de la surface de centrage (31) du corps (30) par rapport au système de coordonnées de la balance (W), on calcule un vecteur (**e_{SP,R}**) décrivant l'excentricité du centre de gravité (**SP_{R}**) par rapport au centre de la surface de centrage (31), et on calcule le balourd du corps (30) à partir de l'excentricité du centre de gravité (**SP_{R}**) par rapport au centre de la surface de centrage (31) et de la masse du corps (30).

5. Procédé selon l'une des revendications 1 à 4, **caractérisé en ce qu'**on utilise des capteurs de déplacement (16) munis d'éléments palpeurs mobiles (20) pouvant être appliqués sur la surface de centrage (31) du corps (30), **en ce qu'**on détermine la masse mobile de chaque élément palpeur (20), et **en ce qu'**on calcule une contribution au balourd de chaque élément palpeur (20) à partir de la masse et de la course de déplacement de chaque élément palpeur (20) indiquée par le signal de mesure, et on soustrait les contributions au balourd calculées du balourd du corps (30) calculé à partir de l'excentricité du centre de gravité (**SP_{R}**).

6. Dispositif pour déterminer le balourd statique d'un corps (30) muni d'une surface de centrage (31), comprenant une balance (10) conçue pour déterminer le centre de gravité du corps (30) et qui est munie d'un logement pouvant recevoir le corps (30) avec son axe de rotation orienté verticalement, et de moyens de centrage guidant le corps (30) lors de sa pose sur le logement dans une position essentiellement centrée par rapport à un point de référence de la balance (10), ledit logement comprenant au moins deux capteurs de déplacement électriques (16) disposés l'un par rapport à l'autre à un distance angulaire définie et qui mesurent la position de la surface de centrage (31) du corps (30) par rapport au logement, les capteurs de déplacement (16) étant connectés à un circuit d'exploitation électrique configuré pour calculer l'excentricité de la surface de centrage (31) du corps (30) par rapport au point de référence de la balance (10) à partir des signaux de mesure des capteurs de déplacement (16), et pour calculer le centre de gravité et le balourd du corps (30) à partir des signaux de mesure de la balance (10) obtenus en pesant le corps (30) et à partir de l'excentricité calculée de la surface de centrage (31).

7. Dispositif selon la revendication 6, **caractérisé en ce que** chacun des capteurs de déplacement (16) est muni d'un élément palpeur mobile (20) pouvant être appliqué sur la surface de centrage (31) du corps (30), et **en ce que** le circuit d'exploitation est conçu pour calculer une contribution au balourd à partir de la masse et de la course de déplacement de chaque élément palpeur (20), et pour soustraire les contributions au balourd calculées du balourd calculé du corps (30).

8. Dispositif selon l'une des revendications 6 ou 7, **caractérisé en ce que** l'élément palpeur (20) du capteur de déplacement (16) peut être déplacé radialement à la main ou au moyen d'un actionneur (22) pouvant être entraîné.

9. Dispositif selon l'une des revendications 6 à 8, **caractérisé en ce que** le logement est muni d'une coupelle de logement (11) en forme de disque circulaire sur laquelle sont disposés les capteurs de déplacement (16) à équidistance du centre de la coupelle de logement (11) et à une distance angulaire de 120°.

10. Dispositif selon la revendication 9, **caractérisé en ce que** le logement est muni d'éléments de logement (15) qui sont disposés sur la coupelle de logement (11) entre les capteurs de déplacement (16) et qui ont des surfaces d'appui (17) pour le corps (30), lesquelles se trouvent dans un plan commun.

11. Dispositif selon la revendication 10, **caractérisé en ce que** le logement est muni d'au moins trois éléments de guidage (18) coniques qui dépassent du plan des surfaces d'appui (17) et qui sont configurés pour guider le corps (30) sur la surface de centrage (31) dans la position essentiellement centrée par rapport au point de référence de la balance (10).
